(19) Europäisches Patentamt / European Patent Office / Office européen des brevets

(11) **EP 2 270 492 B1**

(12) **EUROPÄISCHE PATENTSCHRIFT**

(45) Veröffentlichungstag und Bekanntmachung des Hinweises auf die Patenterteilung:
**20.08.2014   Patentblatt 2014/34**

(51) Int Cl.:
**G01N 31/12** *(2006.01)*      *G01N 5/04* *(2006.01)*

(21) Anmeldenummer: **10450112.7**

(22) Anmeldetag: **30.06.2010**

(54) **Bestimmung des biogenen und fossilen Kohlenstoffgehaltes sowie des Massen- und Energieanteils von Brennstoffen und Sekundärrohstoffen**

Determining the biogenic and fossil carbon content, as well as the share of mass and energy, of fuels and recycling materials

Détermination de la teneur de carbone fossile et biogène, et du taux de masse et d'énergie, des combustibles et matières recyclées

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **03.07.2009   AT 10452009**

(43) Veröffentlichungstag der Anmeldung:
**05.01.2011   Patentblatt 2011/01**

(73) Patentinhaber: **Technische Universität Wien**
**1040 Wien (AT)**

(72) Erfinder:
 • **Rechberger, Helmut**
   **1070 Wien (AT)**
 • **Fellner, Johann**
   **1140 Wien (AT)**
 • **Cencic, Oliver**
   **2404 Petronell-Carnuntum (AT)**

(74) Vertreter: **Barger, Werner**
**Patentanwälte**
**Barger, Piso & Partner**
**Mahlerstrasse 9**
**Postfach 96**
**1015 Wien (AT)**

(56) Entgegenhaltungen:
**EP-B1- 1 301 747     AT-B1- 501 170**

 • **JOHANN FELLNER ET AL: "A New Method to Determine the Ratio of Electricity Production from Fossil and Biogenic Sources in Waste-to-Energy Plants", ENVIRONMENTAL SCIENCE & TECHNOLOGY, Bd. 41, Nr. 7, 1. April 2007 (2007-04-01), Seiten 2579-2586, XP055057324, ISSN: 0013-936X, DOI: 10.1021/es0617587**

**Beschreibung**

Die Erfindung betrifft ein Verfahren zur Ermittlung des biogenen und fossilen Kohlenstoffgehaltes sowie der Massen- und Energieanteile biogener und fossiler Materialien von verschiedensten Brennstoffen bzw. Sekundärrohstoffen (z.B. Sekundärbrennstoffe, Abfälle) entsprechend dem Oberbegriff des Anspruches 1.

Abfälle und daraus produzierte Brennstoffe bestehen aus einer in der Regel unbekannten Mischung biogener und fossiler Materialien. Auf Grund gesetzlicher Vorgaben, insbesondere der Emissionshandelsrichtlinie 2003/87/EG, sind Betreiber von Industrieanlagen in denen "gemischte" bzw. heterogene Abfälle als Brennstoff oder im Fall der Stahlindustrie auch als Reduktionsmittel eingesetzt werden, am Gehalt an biogenen bzw. fossilen Kohlenstoff des eingesetzten Brennstoffs bzw. Reduktionsmittels interessiert. Zur Bestimmung dieser beider Größen waren in der Vergangenheit drei Verfahren bekannt:

- die Sortieranalyse,
- die selektive Lösungsmethode, und
- die sogenannte Radiocarbonmethode.

Eine detaillierte Beschreibung dieser drei Verfahren findet sich in den CEN - Normen "TS 15440:2006 Feste Sekundärbrennstoffe - Verfahren zur Bestimmung des Gehaltes an Biomasse" sowie "TS 15747:2008 $^{14}$C-Verfahren zur Bestimmung des Gehaltes an Biomasse".

Alternativ zu diesen Verfahren kann bei Müllverbrennungs- bzw. Mitverbrennungsanlagen (darunter versteht man Verbrennungsanlagen, in denen Abfälle als Ersatz- oder Zusatzbrennstoff bis zu 40 % der in einem Kalendervierteljahr tatsächlich zugeführten durchschnittlichen Gesamtbrennstoffwärmeleistung eingesetzt werden) die sogenannte Bilanzen-Methode herangezogen werden, um den Anteil an biogenen bzw. fossilen $CO_2$ Emissionen, die beim Betrieb der Anlage entstehen, zu bestimmen. Die Bilanzen-Methode wurde in der AT 501170 B der Anmelderin geoffenbart. Sie beschreibt ein Verfahren zur Ermittlung der Anteile biogener und fossiler Energieträger sowie biogener und fossiler Kohlendioxidemissionen beim Betrieb von Verbrennungsanlagen. Sie basiert auf einem mathematischen Abgleich von insgesamt sechs Bilanzgleichungen (fünf Güter- bzw. Stoffbilanzen und eine Energiebilanz) mit messbaren Größen der Verbrennungsanlage. Jede der Gleichungen charakterisiert eine bestimmte Abfalleigenschaft (z.B.: Aschegehalt, Heizwert, etc.). Mit Hilfe der Bilanzen-Methode wird der gesamte Brennstoff, der in der Anlage im gewählten Bezugszeitraum eingesetzt wird, charakterisiert. Dieser Vorteil gegenüber Methoden, bei denen Stichproben des Abfallinputs gezogen werden müssen ist mit dem Nachteil verbunden, dass die Ermittlung der Brennstoffzusammensetzung nur rückwirkend, d.h. nach dessen Verbrennung, erfolgen kann, und auch das nur dann, wenn die Verbrennungsanlage mit den passenden Messeinrichtungen ausgerüstet ist und deren Messdaten passend gespeichert und ausgewertet werden.

Im Fall aufbereiteter Abfälle (Sekundärbrennstoffe bzw. -rohstoffe) ist eine rückwirkende Charakterisierung allerdings ungenügend, da gesicherte Informationen über die Sekundärrohstoffzusammensetzung (z.B. Gehalt an biogenem bzw. fossilem Kohlenstoff) bereits vor der Nutzung dieser Sekundärmaterialien von den Abnehmern eingefordert werden. Auch die Produzenten der Sekundärmaterialien benötigen verlässliche Methoden zur Charakterisierung ihrer Produkte noch bevor diese auf den Markt gebracht werden. Es besteht somit Bedarf an einer zuverlässigen und kostengünstigen Methode zur Bestimmung des biogenen und fossilen Kohlenstoffgehaltes sowie des Massen- und Energieanteils von biogenen und fossilen Materialien von Brennstoffen bzw. Sekundärrohstoffen im Allgemeinen (z.B. Reduktionsmittel bei der Stahlproduktion).

Die Erfindung hat die Aufgabe, ein derartiges Verfahren anzugeben.

Das erfindungsgemäße Verfahren entsprechend den kennzeichnenden Merkmalen des Anspruches 1 beruht im Allgemeinen auf folgendem Ablaufschema, wobei die Reihenfolge der einzelnen Schritte im Einzelfall abgeändert werden kann (es wird auf das am Ende der Beschreibung angegebene Verzeichnis der verwendeten Formelzeichen verwiesen):

1. Aus dem zu charakterisierenden Brennstoff bzw. Sekundärrohstoff wird entweder einmalig oder von Zeit zu Zeit, beispielsweise jeweils für eine Jahreszeit oder nach Änderung der Sammelstrategie bzw. der Aufbereitungstechnik, eine (repräsentative) Probe entnommen

2. Das Probenmaterial wird, beispielsweise, bei Temperaturen von über 100°C (vorzugsweise bei 105°C) bis zur Gewichtskonstanz getrocknet, wobei aus dem gemessenen Massenverlust (Differenz aus der Masse vor und nach der Trocknung) der Wassergehalt des zu charakterisierenden Materials berechnet wird.

3. Anschließend wird das Probenmaterial aufbereitet, d.h. die Korngröße des Materials wird verringert. Im Allgemeinen erfolgt zwischen den Zerkleinerungsschritten eine Verjüngung des Probenmaterials. Die "finale" Korngröße des Materials wird primär von der Heterogenität des Materials und von der Analyseneinwaage (zur Bestimmung des Gehaltes an C, H, O, N, und S) bestimmt.

4. An einem Teil des Probenmaterials wird der Aschegehalt bzw. Glühverlust bestimmt. Im Allgemeinen wir die Probe dazu bei Temperaturen von 400 - bis maximal 600°C (vorzugsweise bei 550°C) so lange geglüht, bis keine Gewichtsabnahme mehr festzustellen ist. Wesentlich beim Glühvorgang ist, dass sämtliches organisches Material mineralisiert wird; anorganisches Material (insbesondere der Karbonatanteil) hingegen muss im Glührückstand verbleiben.

5. Mit Hilfe eines Elementaranalysators wird im Batch-Betrieb unter genau definierten Bedingungen der Gehalt an C, H, O, N und S bzw. C, H, O und N bzw. C, H, O und S bzw. C, H und O des trockenen Probenmaterials (Brennstoff bzw. Sekundärrohstoff) sowie des trockenen Glührückstandes bestimmt. Für die Bestimmung des Gehaltes an C, H, O, S oder N des Glührückstandes kann sofern vorhanden auch auf Literaturdaten zurückgegriffen werden. Je nach Bedarf muss das Probenmaterial bzw. auch der Glührückstand vor der Elementaranalyse nochmals bis zur Gewichtskonstanz getrocknet werden. Dies soll verhindern, dass es infolge von Wasseraufnahme (z.B. durch Luftfeuchtigkeit) des Materials im Zeitraum von der 1. Trocknung (Arbeitsschritt 2.) bis zur Elementaranalyse zur Verfälschungen der Messergebnisse kommt.

6. Unter Verwendung der im Folgenden angeführten Gleichungen wird der Anteil an biogenen bzw. fossilen Materialien ($m_{biomass}$ bzw. $m_{fossil\ organic\ matter}$) im zu untersuchenden Brennstoff bzw. Sekundärrohstoff berechnet.

Vorzugsweise werden für die Auswertungen alle 5 Stoffbilanzen (C-, H-, O-, N- und S-Bilanz) verwendet, da dies zum genauesten Endresultat (biogener bzw. fossiler Kohlenstoffgehalt) führt. Für verlässliche Aussagen über den Biomasseanteil von Brennstoffen sind zumindest 3 Stoffbilanzen zu verwenden (vorzugsweise: C-, H- und O-Bilanz).
Die Zeichnung zeigt entsprechende Massenanteile, Kohlenstoffgehalte bzw. Energieträgeranteile in den Figu-ren 1 bis 3.

<u>a) Kohlenstoffbilanz:</u>

Der organische Kohlenstoffgehalt des trockenen Brennstoffs bzw. Sekundärrohstoffs $TOC_{sample}$ = ($TC_{sample}$ - $TC_{ash} \cdot m_{ash}$)/($1-m_{ash}$) entspricht der Summe des organischen Kohlenstoffs der biogenen und fossilen Materialien ($C_{biomass} \cdot m_{biomass}$ bzw. $C_{fossil\ organic\ matter} \cdot m_{fossil\ organic\ matter}$). Wertebereiche für die organischen Kohlenstoffgehalte biogener bzw. fossiler Materialien ($C_{biomass}$ und $C_{fossil\ organic\ matter}$) lassen sich aus Sortieranalysen (mit anschließenden Elementaranalysen im Labor) oder aus Literaturangaben ableiten.

$$C_{biomass} \cdot m_{biomass} + C_{fossil\ organic\ matter} \cdot m_{fossil\ organic\ matter} = TOC_{sample} = \frac{TC_{sample} - TC_{ash} \cdot m_{ash}}{1 - m_{ash}}$$

<u>b) Wasserstoffbilanz:</u>

Der organische Wasserstoffgehalt des trockenen Brennstoffs bzw. Sekundärrohstoffs $TOH_{sample}$ = ($TH_{sample}$ -$TH_{ash} \cdot m_{ash}$)/($1-m_{ash}$) entspricht der Summe des organischen Wasserstoffs der biogenen und fossilen Materialien ($H_{biomass} \cdot m_{biamass}$ und $H_{fossil\ organic\ matter} \cdot m_{fossil\ organic\ matter}$). Wertebereiche für die organischen Wasserstoffgehalte biogener bzw. fossiler Materialien ($H_{biomass}$ bzw. $H_{fossil\ organic\ matter}$) lassen sich aus Sortieranalysen (mit anschließenden Elementaranalysen im Labor) oder aus Literaturangaben ableiten.

$$H_{biomass} \cdot m_{biomass} + H_{fossil\ organic\ matter} \cdot m_{fossil\ organic\ matter} = TOH_{sample} = \frac{TH_{sample} - TH_{ash} \cdot m_{ash}}{1 - m_{ash}}$$

<u>c) Sauerstoffbilanz:</u>

Der organische Sauerstoffgehalt des trockenen Brennstoffs bzw. Sekundärrohstoffs $TOO_{sample}$ = ($TO_{sample}$ - $TO_{ash} \cdot m_{ash}$)/($1-m_{ash}$) entspricht der Summe des organischen Sauerstoffs der biogenen und fossilen Materialien ($O_{biomass} \cdot m_{biomass}$ und $O_{fossil\ organic\ matter} \cdot m_{fossil\ organic\ matter}$). Wertebereiche für die organischen Sauerstoffgehalte biogener bzw. fossiler Materialien ($O_{biamass}$ bzw. $O_{fossil\ organic\ matter}$) lassen sich aus Sortieranalysen (mit anschließenden Elementaranalysen im Labor) oder aus Literaturangaben ableiten.

$$O_{biomass} \cdot m_{biomass} + O_{fossil\ organic\ matter} \cdot m_{fossil\ organic\ matter} = TOO_{sample} = \frac{TO_{sample} - TO_{ash} \cdot m_{ash}}{1 - m_{ash}}$$

d) Schwefelbilanz:

Der organische Schwefelgehalt des trockenen Brennstoffs bzw. Sekundärrohstoffs $TOS_{sample}$ = ($TS_{sample}$ - $TS_{ash} \cdot m_{ash}$)/($1-m_{ash}$) entspricht der Summe des organischen Schwefels der biogenen und fossilen Materialien ($S_{biomass} \cdot m_{biomass}$ und $S_{fossil\ organic\ matter} \cdot m_{fossil\ organic\ matter}$). Wertebereiche für die organischen Schwefelgehalte biogener bzw. fossiler Materialien ($S_{biomass}$ bzw. $S_{fossil\ organic\ matter}$) lassen sich aus Sortieranalysen (mit anschließenden Elementaranalysen im Labor) oder aus Literaturangaben ableiten.

$$S_{biomass} \cdot m_{biomass} + S_{fossil\ organic\ matter} \cdot m_{fossil\ organic\ matter} = TOS_{sample} = \frac{TS_{sample} - TS_{ash} \cdot m_{ash}}{1 - m_{ash}}$$

e) Stickstoffbilanz:

Der organische Stickstoffgehalt des trockenen Brennstoffs bzw. Sekundärrohstoffs $TON_{sample}$ = ($TN_{sample}$ - $TN_{ash} \cdot m_{ash}$)/($1-m_{ash}$) entspricht der Summe des organischen Stickstoffs der biogenen und fossilen Materialien ($N_{biomass} \cdot m_{biomass}$ und $N_{fossil\ organic\ matter} \cdot m_{fossil\ organic\ matter}$).
Wertebereiche für die organischen Stickstoff gehalte biogener bzw. fossiler Materialien ($N_{biomass}$ bzw. $N_{fossil\ organic\ matter}$) lassen sich aus Sortieranalysen (mit anschließenden Elementaranalysen im Labor) oder aus Literaturangaben ableiten.

$$N_{biomass} \cdot m_{biomass} + N_{fossil\ organic\ matter} \cdot m_{fossil\ organic\ matter} = TON_{sample} = \frac{TN_{sample} - TN_{ash} \cdot m_{ash}}{1 - m_{ash}}$$

Zusätzlich zu den angeführten Stoffbilanzen sind im Rahmen der Berechung folgende Nebenbedingungen in Form von Gleichungen zu berücksichtigen:
Für biogene Materialien kann angenommen werden, dass die Summe aus C-, H-, O-, N-und S-Gehalte (wasser- und aschefrei) näherungsweise 1000 g/kg wasser- und aschefreie Substanz ergibt, während für fossile Materialien, je nach dem Anteil an chlorierten bzw. fluorierten Kunststoffen (und damit dem Fluor- bzw. Chlorgehalt) ein etwas geringerer Wert als 1000 g/kg angenommen werden kann.

$$C_{biomass} + H_{biomass} + O_{biomass} + S_{biomass} + N_{biomass} \approx\leq 1000$$

$$C_{fossil\ organic\ matter} + H_{fossil\ organic\ matter} + O_{fossil\ organic\ matter} + \\ + S_{fossil\ organic\ matter} + N_{fossil\ organic\ matter} \approx 970 \pm 20^{[1]}$$

[1] 970$\pm$20 g/kg ist ein typischer Wert für Ersatzbrennstoffe, die aus hausmüllähnlichen Abfällen erzeugt werden
Ebenso muss die Summe der aus Analysedaten berechneten organischen C-, H-, O-, N-und S-Gehalte der aschefreien organischen Substanz näherungsweise 1000 g/kg ergeben, wobei wiederum je nach dem Anteil an chlorierten bzw. fluorierten Kunststoffen ein etwas geringer Wert als 1000 g/kg angenommen werden kann.

$$\frac{TC_{sample} + TH_{sample} + TO_{sample} + TS_{sample} + TN_{sample}}{(1 - m_{ash})} - \left(\begin{array}{c}TC_{ash} + TH_{ash} \\ + TO_{ash} + TS_{ash} + TN_{ash}\end{array}\right) \cdot \frac{m_{ash}}{(1 - m_{ash})} \approx 985 \pm 15 \quad [2]$$

[2] $985 \pm 15$ g/kg ist ein typischer Wert für Ersatzbrennstoffe, die aus hausmüllähnlichen Abfällen erzeugt werden

### 7. Mathematische Lösung des Gleichungssystems

Ein Zusammenführen der unter Punkt 6 vorgestellten Bilanzgleichungen führt zu einem Gleichungssystem bestehend aus mehreren Gleichungen mit 2 Unbekannten (asche- und wasserfreie Massenanteile biogener bzw. fossiler Materialien $m_{biomass}$ bzw. $m_{fossil\ organic\ matter}$). Für den Fall, dass zumindest 3 Bilanzgleichungen (vorzugsweise Kohlenstoff-, Wasserstoff- und Sauerstoffbilanz) verwendet werden, handelt es sich um ein überbestimmtes Gleichungssystem, dessen Lösung über nichtlineare Ausgleichsrechnung ermittelt werden muss. Die Anwendung der nichtlinearen Ausgleichsrechnung begründet sich in der Tatsache, dass die Koeffizienten ($C_{biomass}$, $C_{fossil\ organic\ matter}$, $H_{fossil\ organic\ matter}$, ...) der Unbekannten und die Ergebnisse der Laboranalysen ($TC_{sample}$, $TC_{ash}$, $m_{ash}$, $TH_{sample}$, ...) durch Mittelwerte (wahrscheinlichste Werte) und Unsicherheitsbereiche gegeben sind, und die Fortpflanzung der Fehler für das Endresultat zu berücksichtigen ist.

Alternativ zur nichtlinearen Ausgleichsrechnung kann das Gleichungssystem auch mittels Monte Carlo Simulation in Kombination mit linearer Ausgleichsrechnung gelöst werden. Bei dieser Näherungslösung werden die Koeffizienten der Unbekannten gemäß ihrer Unsicherheiten mittels Monte Carlo Simulation variiert. Für jede dabei entstehende Kombination von Koeffizienten wird eine lineare Ausgleichsrechung durchgeführt. Da in jeder Gleichung genau eine Beobachtungsgröße (Anlagenmesswert) als lineare Funktion der Unbekannten vorkommt, kann dabei das Gauß-Markov-Modell angewandt werden.

Entsprechend der Anzahl der Wiederholungen der Monte Carlo Simulation erhält man dadurch sowohl für jede Unbekannte als auch für jede Beobachtung (Messwerte) die gleiche Anzahl möglicher Werte. Diese Werte werden statistisch ausgewertet und durch Parameter (Mittelwert, Standardabweichung) beschrieben.

### 8. Berechnung des biogenen bzw. fossilen organischen sowie des anorganischen Kohlenstoffgehaltes:

Aus den ermittelten Massenanteilen biogener bzw. fossiler Materialien ($m_{biomass}$ bzw. $m_{fossil\ organic\ matter}$) lässt sich unter Verwendung der Kohlenstoffgehalte $C_{biomass}$, $C_{fossil\ organic\ matter}$ biogener und fossiler Materialien der biogene bzw. fossile Kohlenstoffgehalt des zu charakterisierenden Brennstoffs bzw. Sekundärrohstoffs bestimmen.

Biogener Kohlenstoffgehalt (bezogen auf die Trockensubstanz):

$$C_{biogen} = C_{biomass} \cdot m_{biomass} \cdot (1 - m_{ash})$$

Fossiler organischer Kohlenstoffgehalt (bezogen auf die Trockensubstanz):

$$C_{fossil} = C_{fossil\ organic\ matter} \cdot m_{fossil\ organic\ matter} \cdot (1 - m_{ash})$$

Anorganischer Kohlenstoffgehalt (bezogen auf die Trockensubstanz):

$$C_{anorganisch} = TC_{ash} \cdot m_{ash}$$

### 9. Berechnung des biomassebürtigen Heizwertanteils:

Unter Zuhilfenahme von empirischen Formeln zur Berechnung des Energieinhaltes von Brennstoffen (z.B. Michel, Dulong, Boje) kann der biomassebürtige Heizwertanteil $HW_{biogen}$ näherungsweise berechnet. Beispielhaft wird dies im Folgenden anhand der Formel von Boje erläutert:

$$HW_{biomass} = \begin{pmatrix} C_{biomass} \cdot 34,834 + H_{biomass} \cdot 93,868 - O_{biomass} \cdot 10,802 \\ + S_{biomass} \cdot 10,467 + N_{biomass} \cdot 6,28 \end{pmatrix} \cdot \frac{1}{1000} \cdot m_{biomass} \cdot (1 - m_{ash})$$

$$HW_{fossil\ organic\ matter} = \begin{pmatrix} C_{fossil\ organic\ matter} \cdot 34,834 + H_{fossil\ organic\ matter} \cdot 93,868 - O_{fossil\ organic\ matter} \cdot 10,802 \\ + S_{fossil\ organic\ matter} \cdot 10,467 + N_{fossil\ organic\ matter} \cdot 6,28 \end{pmatrix} \cdot$$

$$\cdot \frac{1}{1000} \cdot m_{fossil\ organic\ matter} \cdot (1 - m_{ash})$$

$$HW_{biogen} = \frac{HW_{biomass}}{HW_{biomass} + HW_{fossil\ organic\ matter}}$$

$$HW_{total} = \left( HW_{biomass} + HW_{fossil\ organic\ matter} \right) \cdot (1 - m_{water}) - m_{water} \cdot 2,45$$

Für den Fall, dass der Heizwert des Materials auch im Labor bestimmt wird, kann der berechnete Heizwert $HW_{total}$ mit dem im Kalorimeter gemessenen Heizwert der Probe abgeglichen werden.

**Chemische Zusammensetzung von wasser- und aschefreier biogener bzw. fossiler organischer Substanz**

Zur Bestimmung des organischen Kohlenstoff-, Wasserstoff-, Sauerstoff-, Schwefel- und Stickstoffgehaltes biogener und fossiler organischer Substanz ($C_{biomass}$, $C_{fossil\ organic\ matter}$, $H_{biomass}$, $H_{fossil\ organic\ matter}$, ...) können

a) Angaben aus der Literatur herangezogen werden (z.B. Fellner et al., 2005),
b) Sortieranalysen (Trennung in biogene und fossile Materialien) mit anschließender Glührückstandsbestimmung und Elementanalysen (C, H, O, N, und S Gehalt des getrockneten Probenmaterials sowie des Glührückstandes) der biogenen bzw. fossilen Materialien durchgeführt werden, sowie
c) Konsumdaten, Informationen über Anwendungsbereiche und mittlere Aufenthaltsdauern von Materialien sowie deren Entsorgungswege herangezogen werden

Für das im Folgenden beschriebene Anwendungsbeispiel wurden Literaturdaten verwendet (siehe Tabelle 1). In der Praxis ist hier im Allgemeinen die chemische Zusammensetzung der enthaltenen biogenen bzw. fossilen organischen Substanz zu verwenden. So ist beispielsweise zur Charakterisierung von Rejektmaterial aus der Papier- bzw. Kartonaufbereitung die chemische Zusammensetzung von wasser- und aschefreien Papier bzw. Karton als Ausgangswert für die Zusammensetzung der im Rejekt enthaltenen biogenen organischen Substanz heranzuziehen.

*Tabelle 1 Elementarzusammensetzung biogener und fossiler Materialien (für hausmüllähnliche Abfälle im Allgemeinen) aus der Literatur*

| | | Mittelwert | Standardabweichung |
|---|---|---|---|
| $C_{biomass}$ | | 483 | 6 |
| $C_{fossil\ organic\ matter}$ | | 779 | 18 |
| $H_{biomass}$ | | 65 | 2 |
| $H_{fossil\ organic\ matter}$ | | 112 | 9 |
| $S_{biomass}$ | [g/kg wasser- und aschefrei] | 1,2 | 0,3 |
| $S_{fossil\ organic\ matter}$ | | 3,0 | 1,5 |
| $N_{biomass}$ | | 8,0 | 3,9 |
| $N_{fossil\ organic\ matter}$ | | 14 | 5,5 |
| $O_{biomass}$ | | 441 | 5 |
| $O_{fossil\ organic\ matter}$ | | 59 | 12 |

**AUSFÜHRUNGSBEISPIEL:**

**Charakterisierung von Ersatzbrennstoffen aus der Papieraufbereitung und aus dem Gewerbemüllsplitting**

Im konkreten Anwendungsbeispiel wurden von folgenden Ersatzbrennstoffen bzw. Abfällen Proben gezogen und diese charakterisiert:

- Ersatzbrennstoffe A, >25mm
- Ersatzbrennstoffe B; >25mm
- Gewerbemüll, Siebreste <35mm
- Gewerbemüll, Siebreste <60mm
- Ersatzbrennstoff C, <25mm
- Ersatzbrennstoff D; <25mm
- Rückstände aus der mechanischen Aufbereitung
- Mischkunststofffraktion <80mm

Es wird auf die am Ende der Beschreibung angeführte Liste der verwendeten Abkürzungen und ihrer Bedeutung und auf die Liste der verwendeten Formelzeichen verwiesen.

Die entnommene Menge an Probenmaterial variierte zwischen 40 und 120 kg. Im Labor wurden die Proben im ersten Schritt bei 105°C bis zur Gewichtskonstanz getrocknet, um den Wassergehalt zu bestimmen (DIN 38414/2). Anschließend wurden die Proben entsprechend ihren mechanischen Eigenschaften in unterschiedliche Materialgruppen getrennt und danach mittels Schneidmühle bzw. Scheibenschwingmühle auf eine Korngröße <0,5 mm zerkleinert, wobei zwischen den einzelnen Zerkleinerungsschritten die Probenmasse verjüngt wurde.

**Analysen**

Das erhaltene Probenmaterial wurde geteilt, wobei ein Teil zur Bestimmung des Glühverlustes bzw. des Aschengehaltes herangezogen wurde (DIN 38414/3). Der zweite Teil der gemahlenen Probe wurde mittels CHNSO Elementaranalysators auf den C, H, O, N, und S Gehalt analysiert. Analog dazu wurde auch der Glührückstand auf den C, H, O, N, und S Gehalt analysiert. Sowohl für den Glühverlust, als auch für die Elementaranalysen wurden Mehrfachbestimmungen durchgeführt.

**Wasser- und Aschegehalt**

Die Wasser- und Aschegehalte der entnommenen Proben sind in Tabelle 2 zusammengefasst.

*Tabelle 2 Wasser- und Aschegehalt sowie Glühverlust der Proben*

| Probennummer | Bezeichnung | Wassergehalt | Aschegehalt* $m_{ash}$ | | Glühverlust* ($1 - m_{ash}$) | |
| --- | --- | --- | --- | --- | --- | --- |
| | | Massenprozent bezogen auf Feuchtsubstanz (FS) | Massenprozent bezogen auf Trockensubstanz (TS) | | | |
| | | | MW | Stabw.** | MW | Stabw.** |
| 1 | Ersatzbrennstoff A, > 25 mm | 54,5% | 38,5% | 0,1% | 61,5% | 0,1% |
| 2 | Ersatzbrennstoff B, > 25 mm | 42,1% | 22,4% | 0,1% | 77.6% | 0,1% |
| 3 | Gewerbemüll, Siebreste <35mm | 16,0% | 65,7% | 0,3% | 34.3% | 0,3% |
| 4 | Gewerbemüll, Siebreste <60mm | 17,0% | 48,6% | 0,3% | 51,4% | 0,3% |
| 5 | Ersatzbrennstoff C, <25mm | 28,9% | 15,1% | 0,0% | 84,9% | 0,0% |
| 6 | Ersatzbrennstoff D; <25mm | 20,9% | 17,0% | 0,3% | 83,0% | 0,3% |
| 7 | Rückstände aus der mechanischen Aufbereitung | 23,2% | 47,0% | 0,1% | 53,0% | 0,1% |
| 8 | Mischkunststofffraktion <80mm | 1.9% | 8,0% | 0,1% | 92,0% | 0,1% |
| * Für den Aschgehalt bzw. Glühverlust wurden Dreifachbestimmungen durchgerührt **<br>** ** Standardabweichung** | | | | | | |

**Gesamtgehalte an C-, H-, O-, N- und S**

Die C-, H-, O-, N- und S-Gesamtgehalte der entnommenen Proben sind in Tabelle 3 zusammengefasst.

Tabelle 3    TC-, TH-, TO-, TS- und TN Gehalte*

| Probennummer | Probenbezeichnung | TC-Gehalt bzw. $TC_{sample}$ | | TH-Gehalt bzw. $TH_{sample}$ | | TO-Gehalt bzw. $TO_{sample}$ | | TS-Gehalt bzw. $TS_{sample}$ | | TN-Gehalt bzw. $TN_{sample}$ | |
|---|---|---|---|---|---|---|---|---|---|---|---|
| | | [g/kg TS] | | | | | | | | | |
| | | MW | Stabw | MW | Stabw | MW | Stabw | MW | Stabw | MW | Stabw |
| 1 | Ersatzbrennstoff A, > 25 mm | 353,9 | 1,7 | 46,1 | 0,3 | 311,3 | 4,5 | 3,1 | 0,5 | 3,7 | 0,2 |
| 2 | Ersatzbrennstoff B, > 25 mm | 490,2 | 4,7 | 67,4 | 0,8 | 258,5 | 5,2 | 4,0 | 0,4 | 2,5 | 0,1 |
| 3 | Gewerbemüll, Siebreste <35mm | 211,5 | 7,6 | 24,6 | 1,1 | 211,4 | 2,1 | 14,2 | 0,6 | 6,3 | 0,1 |
| 4 | Gewerbemüll, Siebreste <60mm | 387,9 | 14,0 | 47,3 | 1,6 | 204,8 | 8,2 | 8,4 | 0,3 | 14,2 | 1,0 |
| 5 | Ersatzbrennstoff C, <25mm | 623,4 | 2,3 | 90,7 | 2,7 | 142,7 | 4,6 | 4,9 | 0,4 | 2,7 | 0,2 |
| 6 | Ersatzbrennstoff D; <25mm | 512,4 | 3,3 | 70,8 | 0,8 | 239,8 | 8,4 | 4,6 | 0,5 | 8,8 | 0,2 |
| 7 | Rückstände aus der mechanischen Aufbereitung | 309,4 | 4,8 | 40,4 | 0,6 | 222,0 | 11,9 | 10,0 | 1,1 | 8,3 | 1,0 |
| 8 | Mischkunststofffraktion <80mm | 715,1 | 2,2 | 101,3 | 0,9 | 101,9 | 4,1 | 3,6 | 0,3 | 2,5 | 0,4 |

*es wurden Vierfachbestimmungen durchgeführt*

**Gehalt an C-, H-, O-, N- und S in den Glührückständen**

Die C-, H-, O-, N- und S-Gehalte der Aschen der Proben sind in Tabelle 4 zusammengefasst.

Tabelle 4        TIC-, TIH-, TIO-, TIS- und TIN Gehalte[*]

| Probennummer | Probenbezeichnung | TIC-Gehalt bzw. $TC_{ash}$ | | TIH-Gehalt bzw. $TH_{ash}$ | | TIO-Gehalt bzw. $TO_{ash}$ | | TIS-Gehalt bzw. $TS_{ash}$ | | TIN-Gehalt bzw. $TN_{ash}$ | |
|---|---|---|---|---|---|---|---|---|---|---|---|
| | | [g/kg Asche] | | | | | | | | | |
| | | MW | Stabw | MW | Stabw | MW | Stabw | MW | Stabw | MW | Stabw |
| 1 | Ersatzbrennstoff A, > 25 mm | 60,2 | 0,9 | 0,9 | 0,1 | 177,1 | 6,1 | 1,3 | 0,1 | 0,3 | 0,0 |
| 2 | Ersatzbrennstoff B, > 25 mm | 52,1 | 0,9 | 1,0 | 0,0 | 150,7 | 5,1 | 5,0 | 0,5 | 0,4 | 0,1 |
| 3 | Gewerbemüll, Siebreste <35mm | 24,4 | 0,1 | 0,4 | 0,1 | 140,8 | 3,0 | 20,5 | 2,4 | 0,4 | 0,0 |
| 4 | Gewerbemüll, Siebreste <60mm | 46,7 | 1,7 | 0,6 | 0,1 | 135,8 | 6,4 | 9,3 | 0,8 | 0,4 | 0,1 |
| 5 | Ersatzbrennstoff C, <25mm | 40,1 | 0,5 | 0,8 | 0,1 | 83,6 | 15,4 | 5,8 | 0,9 | 0,4 | 0,1 |
| 6 | Ersatzbrennstoff D; <25mm | 28,7 | 0,3 | 0,9 | 0,0 | 68,5 | 17,2 | 14,5 | 0,6 | 0,7 | 0,1 |
| 7 | Rückstände aus der mechanischen Aufbereitung | 18,6 | 0,3 | 0,6 | 0,2 | 106,6 | 4,6 | 19,3 | 0,9 | 0,3 | 0,1 |
| 8 | Mischkunststofffraktion <80mm | 19,1 | 1,8 | 1,0 | 0,2 | 41,8 | 19,7 | 8,5 | 1,9 | 0,3 | 0,1 |

*es wurden Vierfachbestimmungen durchgeführt*

**Resultate**

**Anteil an biogenen bzw. fossilen Materialien**

Mit dem erfindungsgemäßen Verfahren wurden die Anteile an biogenen bzw. fossilen Materialien berechnet. Die Ergebnisse sind in den folgenden Tabellen und den Figuren zusammengefasst.

Tabelle 5          Massenanteil biogener bzw. fossiler Materialen (wasser- und aschefrei)

| Probennummer | Probenbezeichnung | biogener Massenanteil $m_{biomass}$ | | fossiler Massenanteil $m_{fossil\ organic\ matter}$ | | Biogener Massenanteil $m_{biomass} \cdot (1-m_{ash}) \cdot (1-m_{water})$ | | Fossiler Massenanteil $m_{fossil\ organic\ matter} \cdot (1-m_{ash}) \cdot (1-m_{water})$ | |
|---|---|---|---|---|---|---|---|---|---|
| | | Massenprozent bezogen auf wasser- und aschefreie organische Substanz | | | | Bezogen auf die Feuchtsubstanz [g/100g FS]* | | | |
| | | MW | Stabw | MW | Stabw | MW | Stabw | MW | Stabw |
| 1 | Ersatzbrennstoff A, > 25 mm | 82,7% | 1,3% | 17,3% | 1,3% | 23,1 | 0,4 | 4,8 | 0,4 |
| 2 | Ersatzbrennstoff B, > 25 mm | 57,6% | 1,8% | 42,4% | 1,8% | 25,9 | 0,8 | 19,0 | 0,8 |
| 3 | Gewerbemüll, Siebreste <35mm | 76,0% | 2,3% | 24,0% | 2,3% | 21,9 | 0,7 | 6,9 | 0,7 |
| 4 | Gewerbemüll, Siebreste <60mm | 42,3% | 4,0% | 57,7% | 4,0% | 18,0 | 1,7 | 24,6 | 1,7 |
| 5 | Ersatzbrennstoff C, <25mm | 21,3% | 2,4% | 78,7% | 2,4% | 12,9 | 1,5 | 47,5 | 1,5 |
| 6 | Ersatzbrennstoff D; <25mm | 56,5% | 1,9% | 43,5% | 1,9% | 37,1 | 1,3 | 28,6 | 1,3 |
| 7 | Rückstände aus der mechanischen Aufbereitung | 71,8% | 2,7% | 28,2% | 2,7% | 29,2 | 1,1 | 11,5 | 1,1 |
| 8 | Mischkunststofffraktion <80mm | 8,6% | 2,6% | 91,4% | 2,6% | 7,7 | 2,4 | 82,6 | 2,4 |

* wasser- und aschefreie organische (biogene bzw. fossile) Substanz bezogen auf Feuchtsubstanz

*Tabelle 6     biogener bzw. fossiler Kohlenstoffgehalt der analysierten Ersatzbrennstoffe*

| Probennummer | Probenbezeichnung | biogener Kohlenstoff-gehalt $C_{biogen}$ | | fossiler Kohlenstoffgehalt (inkl. anorganischem Kohlenstoff) $C_{fossil} + C_{anorganisch}$ | | biogener Kohlenstoff-gehalt | | fossiler Kohlenstoff-gehalt (inkl. anorganischem Kohlenstoff) | |
|---|---|---|---|---|---|---|---|---|---|
| | | [g/kg TS] | | | | [g/kg FS] | | | |
| | | MW | Stabw | MW | Stabw | MW | Stabw | MW | Stabw |
| 1 | Ersatzbrennstoff A, > 25 mm | 246 | 4 | 106 | 7 | 112 | 2 | 48 | 3 |
| 2 | Ersatzbrennstoff B, > 25 mm | 217 | 7 | 270 | 12 | 126 | 4 | 156 | 6 |
| 3 | Gewerbemüll, Siebreste <35mm | 125 | 4 | 80 | 6 | 105 | 4 | 67 | 5 |
| 4 | Gewerbemüll, Siebreste <60mm | 105 | 10 | 252 | 16 | 87 | 8 | 209 | 13 |
| 5 | Ersatzbrennstoff C, <25mm | 88 | 10 | 535 | 17 | 62 | 7 | 380 | 8 |
| 6 | Ersatzbrennstoff D; <25mm | 227 | 8 | 286 | 13 | 179 | 7 | 226 | 8 |
| 7 | Rückstände aus der mechanischen Aufbereitung | 183 | 7 | 125 | 11 | 141 | 6 | 96 | 8 |
| 8 | Mischkunststofffraktion <80mm | 38 | 12 | 676 | 21 | 37 | 12 | 663 | 12 |

*Tabelle 7     biogener bzw. fossiler Heizwert der analysierten Ersatzbrennstoffe*

| Probennummer | Probenbezeichnung | biogener Heizwert $H_{biomass}$ | | fossiler Heizwert $H_{fossil\ organic\ matter}$ | | Verdampfungs-energie des Wasser | Heizwert gesamt $H_{total}$ | |
|---|---|---|---|---|---|---|---|---|
| | | [MJ/kg TS] | | | | [MJ/kg TS] | | |
| | | MW | Stabw | MW | Stabw | | MW | Stabw |
| 1 | Ersatzbrennstoff A, > 25 mm | 4,22 | 0,07 | 1,82 | 0,14 | 1,34 | 4,71 | 0,07 |
| 2 | Ersatzbrennstoff B, > 25 mm | 5,69 | 0,18 | 7,15 | 0,31 | 1,03 | 11,88 | 0,12 |
| 3 | Gewerbemüll, Siebreste <35mm | 4,98 | 0,15 | 2,53 | 0,25 | 0,39 | 6,51 | 0,09 |
| 4 | Gewerbemüll, Siebreste <60mm | 4,12 | 0,39 | 9,06 | 0,64 | 0,42 | 12,34 | 0,17 |
| 5 | Ersatzbrennstoff C, <25mm | 2,96 | 0,34 | 17,95 | 0,55 | 0,71 | 20,30 | 0,21 |
| 6 | Ersatzbrennstoff D; <25mm | 8,51 | 0,29 | 10,59 | 0,47 | 0,51 | 17,35 | 0,13 |
| 7 | Rückstände aus der mechanischen Aufbereitung | 6,67 | 0,25 | 4,20 | 0,40 | 0,57 | 9,51 | 0,10 |
| 8 | Mischkunststofffraktion <80mm | 1,78 | 0,55 | 31,29 | 0,91 | 0,05 | 32,70 | 0,12 |

*Tabelle8*      *biogener bzw. fossiler Heizwertanteil der analysierten Ersatzbrennstoffe*

| Probennummer | Probenbezeichnung | Biogener Heizwertanteil $H_{biogen}$ | | Fossiler Heizwertanteil $\left(1 - H_{biogen}\right)$ | |
|---|---|---|---|---|---|
| | | [%] | | | |
| | | MW | Stabw | MW | Stabw |
| 1 | Ersatzbrennstoff A, > 25 mm | 70,1% | 1,3% | 29,9% | 2,3% |
| 2 | Ersatzbrennstoff B, > 25 mm | 44,4% | 1,5% | 55,6% | 2,4% |
| 3 | Gewerbemüll, Siebreste <35mm | 66,1% | 2,4% | 33,9% | 3,6% |
| 4 | Gewerbemüll, Siebreste <60mm | 31,3% | 3,1% | 68,7% | 5,1% |
| 5 | Ersatzbrennstoff C, <25mm | 14,2% | 1,6% | 85,8% | 2,7% |
| 6 | Ersatzbrennstoff D; <25mm | 44,6% | 1,7% | 55,4% | 2,7% |
| 7 | Rückstände aus der mechanischen Aufbereitung | 61,1% | 2,5% | 38,9% | 4,0% |
| 8 | Mischkunststofffraktion <80mm | 5,4% | 1,7% | 94,6% | 2,8% |

**Literatur:**

CEN, 2006. Feste Sekundärbrennstoffe - Verfahren zur Bestimmung des Gehaltes an Biomasse. CEN/TS 15440:2006.

CEN, 2008. Feste Sekundärbrennstoffe - 14C-Verfahren zur Bestimmung des Gehaltes an Biomasse. CEN/TS 15747:2008.

Europäisches Parlament, 2003. Richtlinie 2003/87/EC über ein System für den Handel mit Treibhausgasemissionszertifikaten in der Gemeinschaft. Amtsblatt der Europäischen Union, L275: 32-46.

Fellner, J., Cencic, O. and Rechberger, H., 2005. Verfahren zur Ermittlung der Anteile biogener und fossiler Energieträger sowie biogener und fossiler Kohlendioxidemissionen beim Betrieb von Verbrennungsanlagen (Bilanzenmethode), Österreichisches Patent Nr. 501170, Wien.

**Verwendete Formelzeichen:**

| | |
|---|---|
| $m_{biomass}$ | Massenanteil der wasser- und aschefreien biogenen Substanz (bezogen auf die gesamte wasser- und aschefreie organische Substanz) [kg wasser- und aschefreie biogene Substanz /kg wasser- und aschefreie organische Substanz] |
| $m_{fossil\ organic\ matter}$ | Massenanteil der wasser- und aschefreien fossilen organischen Substanz (bezogen auf die gesamte wasser- und aschefreie organische Substanz) [kg wasser- und aschefreie fossile organische Substanz/kg wasser- und aschefreie organische Substanz], $m_{fossil\ organic\ matter} = (1 - m_{biomass})$ |
| $m_{ash}$ | Aschegehalt (bezogen die Trockensubstanz) [kg Asche/kg TS], bestimmt durch Glühversuch |
| $m_{water}$ | Wassergehalt (bezogen auf die Feuchtsubstanz) [kg $H2O$/kg FS] |
| $TOC_{sample}$ | Organischer Kohlenstoffgehalt des Brennstoffs [g C/kg wasser- und aschefreie organische Substanz] |
| $TC_{sample}$ | Gesamter Kohlenstoffgehalt des Brennstoffs (organischer und anorganischer) [g C/kg TS] |
| $TC_{ash}$ | Kohlenstoffgehalt der Asche (anorganisch) [g C/kg Asche] |
| $C_{biomass}$ | Kohlenstoffgehalt der wasser- und aschefreien biogenen Substanz [g C/kg wasser- und aschefreie biogene Substanz] |
| $C_{fossil\ orgimic\ matter}$ | Kohlenstoffgehalt der wasser- und aschefreien fossilen organischen Substanz [g C/kg wasser- und aschefreie fossile organische Substanz] |

| | |
|---|---|
| $TOH_{sample}$ | Organischer Wasserstoffgehalt des Brennstoffs [g H/kg wasser- und aschefreie organische Substanz] |
| $TH_{sample}$ | Gesamter Wasserstoffgehalt des Brennstoffs (organischer und anorganischer) [g H/kg TS] |
| $TH_{ash}$ | Wasserstoffgehalt der Asche (anorganisch) [g H/kg Asche] |
| $H_{biomass}$ | Wasserstoffgehalt der wasser- und aschefreien biogenen Substanz [g H/kg wasser- und aschefreie biogene Substanz] |
| $H_{fossil\ organic\ matter}$ | Wasserstoffgehalt der wasser- und aschefreien fossilen organischen Substanz [g H/kg wasser- und aschefreie fossile organische Substanz] |
| $TOO_{sample}$ | Organischer Sauerstoffgehalt des Brennstoffs [g O/kg wasser- und aschefreie organische Substanz] |
| $TO_{sample}$ | Gesamter Sauerstoffgehalt des Brennstoffs (organischer und anorganischer) [g O/kg TS] |
| $TO_{ash}$ | Sauerstoffgehalt der Asche (anorganisch) [g O/kg Asche] |
| $O_{biomass}$ | Sauerstoffgehalt der wasser- und aschefreien biogenen Substanz [g O/kg wasser- und aschefreie biogene Substanz] |
| $O_{fossil\ organic\ matter}$ | Sauerstoffgehalt der wasser- und aschefreien fossilen organischen Substanz [g O/kg wasser- und aschefreie fossile organische Substanz] |
| $TOS_{sample}$ | Organischer Schwefelgehalt des Brennstoffs [g S/kg wasser- und aschefreie organische Substanz] |
| $TS_{sample}$ | Gesamter Schwefelgehalt des Brennstoffs (organischer und anorganischer) [g S/kg TS] |
| $TS_{ash}$ | Schwefelgehalt der Asche (anorganisch) [g S/kg Asche] |
| $S_{biomass}$ | Schwefelgehalt der wasser- und aschefreien biogenen Substanz [g S/kg wasser- und aschefreie biogene Substanz] |
| $S_{fossil\ organic\ matter}$ | Schwefelgehalt der wasser- und aschefreien fossilen organischen Substanz [g S/kg wasser- und aschefreie fossile organische Substanz] |
| $TON_{sample}$ | Organischer Stickstoffgehalt des Brennstoffs [g N/kg wasser- und aschefreie organische Substanz] |
| $TN_{sample}$ | Gesamter Stickstoffgehalt des Brennstoffs (organischer und anorganischer) [g N/kg TS] |
| $TN_{ash}$ | Stickstoffgehalt der Asche (anorganisch) [g N/kg Asche] |
| $N_{biomass}$ | Stickstoffgehalt der wasser- und aschefreien biogenen Substanz [g N/kg wasser- und aschefreie biogene Substanz] |
| $N_{fossil\ organic\ matter}$ | Stickstoffgehalt der wasser- und aschefreien fossilen organischen Substanz [g N/kg wasser- und aschefreie fossile organische Substanz] |
| $C_{biogen}$ | biogener Kohlenstoffgehalt, bezogen auf die Trockensubstanz [g C/kg TS] |
| $C_{fossil}$ | fossiler organischer Kohlenstoffgehalt, bezogen auf die Trockensubstanz [g C/kg TS] |
| $C_{amorganisch}$ | anorganischer Kohlenstoffgehalt, bezogen auf die Trockensubstanz [g C/kg TS] |
| $HW_{biomass}$ | unterer Heizwert der biogenen Substanz, bezogen auf die Trockensubstanz [MJ/kg TS] |
| $HW_{fossil\ organic\ matter}$ | unterer Heizwert der fossilen organischen Substanz, bezogen auf die Trockensubstanz [MJ/kg TS] |
| $HW_{biogen}$ | biogener Heizwertanteil bezogen auf den gesamten Heizwert der Trockensubstanz [MJ/MJ] |
| $HW_{total}$ | unterer Heizwert des Brennstoffs [MJ/kg FS] |

**Abkürzungen:**

| | |
|---|---|
| MW oder Mittelw. | Mittelwert |
| SD oder Stabw | Standardabweichung |
| FS | Feuchtsubstanz |
| TS | Trockensubstanz |

**Patentansprüche**

1. Verfahren zur Ermittlung der biogenen und fossilen organischen Kohlenstoffgehalte bzw. Energieanteile von Brennstoffen oder Sekundärrohstoffen, wobei die Ermittlung der Anteile im zu charakterisierenden Material durch die Bestimmung von zumindest drei der folgenden Stoffbilanzen erfolgt: der Kohlenstoffbilanz, der Wasserstoffbilanz, der Sauerstoffbilanz, der Stickstoffbilanz und der Schwefelbilanz, **dadurch gekennzeichnet, dass** dem zu charakterisierenden Brennstoff bzw. Sekundärrohstoff eine Probe entnommen wird, dass das Probenmaterial getrocknet wird, dass aus dem gemessenen Massenverlust, der Differenz der Masse vor und nach der Trocknung, der Wassergehalt des zu charakterisierenden Materials berechnet wird, dass anschließend daran das Probenmaterial aufbereitet wird, d.h. dass die Korngröße des Materials verkleinert wird, dass sodann aus einem Teil des Probenmaterials der Aschegehalt bzw. Glühverlust bestimmt wird, wobei die Probe dazu bei Temperaturen von 400 bis 600°C so lange geglüht wird, bis keine Gewichtsabnahme mehr festzustellen ist, sodann wird der Gehalt an C, H, O, N und S bzw. C, H, O und N bzw. C, H, O und S bzw. C, H und O des trockenen Probenmaterials sowie des trockenen Glührückstandes bestimmt und den Bilanzen zugrunde gelegt.

2. Verfahren nach Anspruch 1, **dadurch gekennzeichnet, dass** die Trocknung bei Temperaturen von über 100°C, vorzugsweise bei 105°C bis zur Gewichtskonstanz erfolgt.

3. Verfahren nach Anspruch 1, **dadurch gekennzeichnet, dass** bei der Verkleinerung der Korngröße die "finale" Korngröße des Materials primär von der Heterogenität des Materials und von der Analyseneinwaage (zur Bestimmung des Gehaltes an C, H, O, N, und S) bestimmt wird.

4. Verfahren nach Anspruch 1, **dadurch gekennzeichnet, dass** die Ermittlung der Anteile zusätzlich durch die Bestimmung von zumindest vier Bilanzen erfolgt.

5. Verfahren nach Anspruch 1, **dadurch gekennzeichnet, dass** die Ermittlung der Anteile zusätzlich durch die Bestimmung von fünf Bilanzen erfolgt.

6. Verfahren nach einem der Ansprüche 1 bis 5, **dadurch gekennzeichnet, dass** der zu charakterisierende Brennstoff bzw. die Sekundärrohstoffe im Labor im Batch-Betrieb auf die Gehalte an Kohlenstoff, Wasserstoff, Sauerstoff, Schwefel und Stickstoff analysiert wird bzw. werden.

7. Verfahren nach einem der Ansprüche 1 bis 5, **dadurch gekennzeichnet, dass** die Anteile mittels Ausgleichsrechnung ermittelt werden.

8. Verfahren nach einem der Ansprüche 1 bis 5, **dadurch gekennzeichnet, dass** die Anteile mittels Monte Carlo Simulation ermittelt werden.

9. Verfahren nach einem der Ansprüche 1 bis 5, **dadurch gekennzeichnet, dass** für die Bestimmung der Elementarzusammensetzung - Gehalt an C, H, O, S oder N - des Glührückstandes Literaturdaten herangezogen werden.

**Claims**

1. Method for determining the biogenic and fossil organic carbon contents and energy components, respectively, of fuels or secondary raw materials, wherein the determination of proportions of the material to be characterized is realized by the determination of at least three of the following material balances: the carbon balance, the hydrogen balance, the oxygen balance, the nitrogen balance and the sulfur balance, **characterized in that** from said to be characterized fuel and a secondary raw material, respectively, a sample is taken, **in that** the sample material is dried, **in that** from the measured loss of weight, the difference in mass before and after the drying, the water content of the material to be characterized is calculated, **in that** subsequent thereto, the sample material is prepared, that is, the grain size of the material is reduced, **in that** then from a part of the sample material, the ash content respectively the ignition loss is determined, wherein the said sample is so long annealed at temperatures of 400 to 600 ° C until no more weight loss is determined, then the content of C, H, O, N and S or of C, H, O and N or of C, H O and S, or of C, H and O of the dry sample material, and the dry residue of ignition are determined and set based on the balance sheets.

2. Method according to claim 1, **characterized in that** the drying is realized at a temperature of over 100 °C, preferably at 105 °C. to constant weight.

3. Method according to claim 1, **characterized in that** during the reduction of the grain size, the "final" grain size of the material is primarily determined by the heterogeneity of the material and of the weight analysis (to determine the content of C, H, O, N, and S).

4. Method according to claim 1, **characterized in that** determining the proportion is further carried out by identifying at least four balances.

5. Method according to claim 1, **characterized in that** determining the proportion is further carried out by identifying five balances.

6. Method according to one of claims 1 to 5, **characterized in that** the fuel to be characterized, respectively the secondary raw materials in the laboratory in a batch operation is analyzed or are analyzed for the content of carbon, hydrogen, oxygen, sulfur and nitrogen.

7. Method according to one of claims 1 to 5, **characterized in that** the proportions are determined by means of regression calculation.

8. Method according to one of claims 1 to 5, **characterized in that** the proportions are determined by Monte Carlo simulation.

9. Method according to one of claims 1 to 5, **characterized in that** for determining the elemental composition - the content of C, H, O, S or N - of ignition residue data from the literature are used.


**Revendications**

1. Procédé de détermination des taux de carbone organique, biogène et fossile, respectivement les parts d'énergie en combustible ou en matières premières secondaires où la détermination des parts dans le matériau à caractériser est réalisée par la détermination d'au moins trois des bilans de matières suivants : le bilan du carbone, le bilan d'hydrogène, le bilan d'oxygène, le bilan d'azote et le bilan de soufre, **caractérisé en ce qu'**un échantillon est prélevé du combustible, respectivement de la matière première secondaire à caractériser, **en ce que** matériau de l'échantillon est séché, **en ce qu'**on calcule la part en eau du matériau à caractériser à partir de la perte de la masse mesurée et à partir de la perte de masse avant et après le séchage, **en ce que** le matériau de l'échantillon est ensuite traité, c'est-à-dire que la taille des grains du matériau est diminuée, **en ce qu'**on détermine ensuite le taux de cendre, respectivement la perte au feu à partir d'un morceau du matériau de l'échantillon, où l'échantillon est cuit à des températures de 400 à 600°C le temps nécessaire pour ne plus voir apparaître de perte de poids, puis le taux de C, H, O, N et S, respectivement C, H, O et N, respectivement C, H, O et S, respectivement C, H et O du matériau de l'échantillon séché ainsi que du résidu de recuit séché sont déterminés et sont à la base des bilans.

2. Procédé selon la revendication 1, **caractérisé en ce que** le séchage est réalisé à des températures supérieures à 100°C, de préférence à 105°C jusqu'à l'obtention d'un poids constant.

3. Procédé selon la revendication 1, **caractérisé en ce qu'**on détermine la taille du grain « finale« lors de la réduction de la taille du grain en premier lieu à partir de l'hétérogénéité du matériau et à partir de l'analyse du poids (pour déterminer la teneur en C, H, O, N et S).

4. Procédé selon la revendication 1, **caractérisé en ce que** la détermination des parts est réalisée en plus par la détermination d'au moins quatre bilans.

5. Procédé selon la revendication 1, **caractérisé en ce que** la détermination des parts est réalisée en plus par la détermination de cinq bilans.

6. Procédé selon une des revendications 1 à 5, **caractérisé en ce que**, pour le combustible à caractériser, respectivement pour les matières premières secondaires on analyse le taux de carbone, d'hydrogène, d'oxygène, de soufre et d'azote au laboratoire par un traitement par lots.

7. Procédé selon une des revendications 1 à 5, **caractérisé en ce que** les parts sont déterminées à l'aide d'un calcul d'ajustement.

8. Procédé selon une des revendications 1 à 5, **caractérisé en ce que** les parts sont déterminées à l'aide d'une simulation de Monte Carlo.

9. Procédé selon une des revendications 1 à 5, **caractérisé en ce qu'**on utilise des informations issues de la littérature pour la détermination de la composition élémentaire - taux en C, H, O, S ou N - du résidu de recuit.

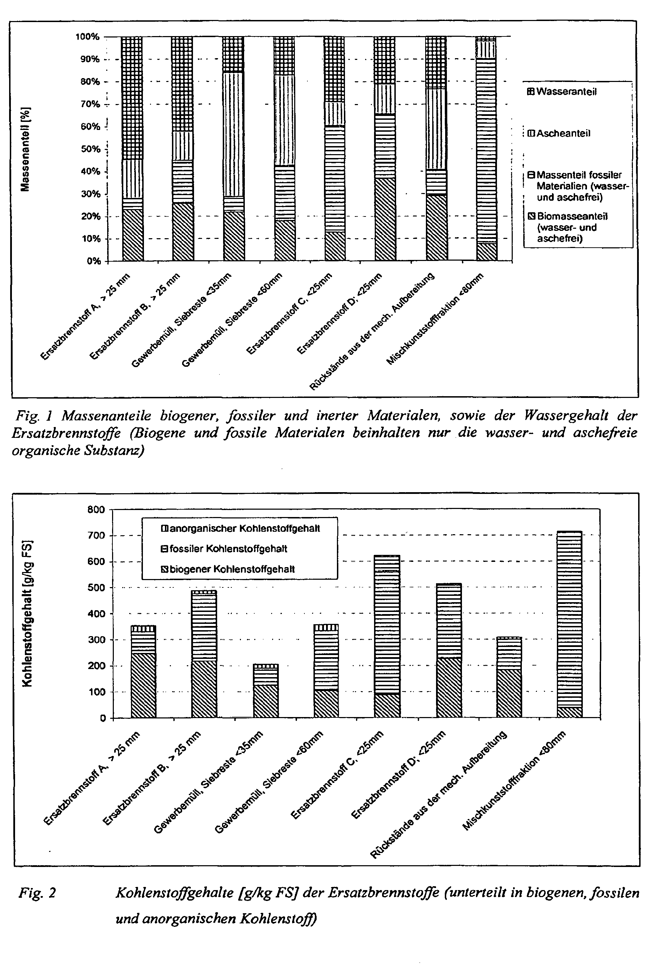

Fig. 1 *Massenanteile biogener, fossiler und inerter Materialen, sowie der Wassergehalt der Ersatzbrennstoffe (Biogene und fossile Materialen beinhalten nur die wasser- und aschefreie organische Substanz)*

Fig. 2     *Kohlenstoffgehalte [g/kg FS] der Ersatzbrennstoffe (unterteilt in biogenen, fossilen und anorganischen Kohlenstoff)*

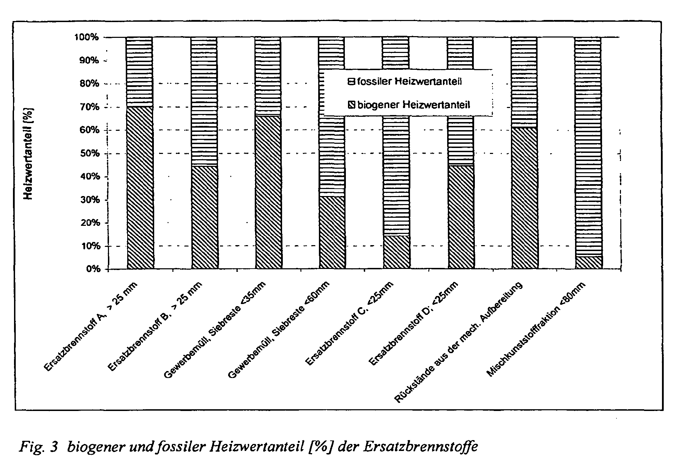

*Fig. 3  biogener und fossiler Heizwertanteil [%] der Ersatzbrennstoffe*

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- AT 501170 B
- AT 501170

**In der Beschreibung aufgeführte Nicht-Patentliteratur**

- Feste Sekundärbrennstoffe - Verfahren zur Bestimmung des Gehaltes an Biomasse. *CEN/TS 15440,* 2006
- Feste Sekundärbrennstoffe - 14C-Verfahren zur Bestimmung des Gehaltes an Biomasse. *CEN/TS 15747,* 2008
- Richtlinie 2003/87/EC über ein System für den Handel mit Treibhausgasemissionszertifikaten in der Gemeinschaft. Amtsblatt der Europäischen Union, 2003, vol. L275, 32-46